# EUROPÄISCHE PATENTANMELDUNG

(11) **EP 4 850 870 A1**
(43) Veröffentlichungstag der Anmeldung: **09.12.2026**
(21) Anmeldenummer: 26177098.6
(22) Anmeldetag: 07.05.2026
(51) Int. Cl.: B25J 9/16

(54) **AUSGLEICHSEINHEIT**

(30) Priorität: 02.06.2025 DE 102025121413; 06.02.2026 DE 102026104898
(71) Anmelder: Liebherr-Verzahntechnik GmbH, 87437 Kempten (DE)
(72) Erfinder: BODENMILLER, David, 87437 Kempten (DE); HIEMER, Lukas, 87437 Kempten (DE); FLESCHUTZ, David, 87437 Kempten (DE); HÖSSLE, Florian, 87437 Kempten (DE); POLLMANN, Jan, 87437 Kempten (DE)
(74) Vertreter: Lorenz Seidler Gossel Part. mbB

(57) **Zusammenfassung**

Die vorliegenden Erfindung zeigt eine Ausgleichseinheit mit mindestens einer durch einen Aktor angetriebenen Linearachse, einem Messsystem und einer Steuereinheit, wobei die Steuereinheit die Linearachse in mindestens einem ersten Betriebsmodus so ansteuert, dass eine auf die Ausgleicheinheit wirkende Gewichtskraft ausgeglichen wird. Dabei ist vorgesehen, dass die Steuerung mindestens eine Kalibrierroutine umfasst, durch welche ein Parameter des Gewichtsausgleichs bestimmt wird.

## Beschreibung

Die Erfindung betrifft eine Ausgleichseinheit, insbesondere für den Einsatz an Handhabungseinheiten wie Robotern oder Portalsystemen, ein System mit einer solchen Ausgleichseinheit sowie ein Verfahren zu deren Betrieb.

Solche Ausgleichseinheiten dienen dazu, einen Endeffektor, beispielsweise einen Greifer oder ein Werkzeug, an einer Handhabungseinheit so anzubinden, dass der Endeffektor beim Einwirken externer Kräfte eine Ausweichbewegung durchführen kann.

Bekannte Ausgleichseinheiten wirken üblicherweise passiv, beispielsweise indem sie über ein Federpakt auf eine Nullstellung vorgespannt sind und eine Bewegung gegenüber der Kraft des Federpaketes erlauben. Dies hat jedoch den Nachteil, dass unterschiedlich große Massen des Endeffektors (inklusive eventuell daran angeordneter weiterer Elemente wie gegriffene Werkstücke oder eingewechselter Werkzeuge) zu unterschiedlichen Auslenkungen der Ausgleichseinheit führen.

Die vorliegende Erfindung betrifft dagegen eine Ausgleichseinheit, welche mindestens eine durch einen Aktor angetriebene Linearachse aufweist, und daher aktiv angesteuert wird. Hierfür ist weiterhin eine Steuereinheit und ein Messsystem vorgesehen.

In einem ersten, bevorzugt kraftgesteuerten Betriebsmodus steuert die Steuereinheit den Aktor so an, dass eine auf die Ausgleichseinheit wirkende Gewichtskraft ausgeglichen wird.

Insbesondere umfasst der erste Betriebsmodus hierbei eine Nullkraftregelung, durch welche die Ausgleichseinheit samt angebautem Endeffektor frei beweglich ist, was beispielsweise für Pick&Place-Anwendungen und/oder Bearbeitungsfunktionen nützlich ist. Alternativ kann in dem ersten Betriebsmodus auch eine bestimmte, vordefinierte Kraft vorgegeben werden, mit welcher der Endeffektor beaufschlagt wird, etwa für Oberflächenbearbeitungen.

Eine Herausforderung besteht darin, dass an der Ausgleichseinheit unterschiedliche Elemente, wie Werkzeuge oder Werkstücke mit unbekanntem Gewicht, angebracht werden können.

Aufgabe der vorliegenden Erfindung ist es hierbei, auch in einer solchen Situation einen zuverlässigen Gewichtsausgleich durchführen zu können.

Diese Aufgabe wird durch eine Ausgleichseinheit gemäß Anspruch 1 gelöst. Bevorzugte Ausgestaltungen der vorliegenden Erfindung sind Gegenstand der Unteransprüche.

Die vorliegende Erfindung umfasst hierbei eine Ausgleichseinheit mit mindestens einer durch einen Aktor angetriebenen Linearachse, einem Messsystem und einer Steuereinheit, wobei die Steuereinheit die Linearachse in mindestens einem ersten Betriebsmodus so ansteuert, dass eine auf die Ausgleicheinheit wirkende Gewichtskraft ausgeglichen wird. Weiterhin umfasst die Steuerung mindestens eine Kalibrierroutine, durch welche ein Parameter des Gewichtsausgleichs bestimmt wird. Bevorzugt ist die Steuerung so ausgestaltet, dass dieser Parameter in einem darauffolgenden Betrieb im ersten Betriebsmodus zur Ansteuerung des Aktors zum Gewichtsausgleich herangezogen wird.

Gemäß einer Ausgestaltung bestimmt das Messsystem die Position der Linearachse und die Kraft des Aktors. Das Messsystem kann hierbei dedizierte Sensoren umfassen und/oder die Positions- und/oder Kraftwerte oder aus Steuergrößen der Ansteuerung des Aktors ableiten. Beispielsweise kann die Kraftmessung bei einem pneumatischen Aktor über den Druck in den Zylinderkammern erfolgen. Bevorzugt ist ein Positionssensor vorgesehen, um die Position der Linearachse zu bestimmen.

Als Aktor kann beispielsweise ein Pneumatikzylinder und/oder ein elektrischer Linearantrieb zum Einsatz kommen.

Gemäß einer Ausgestaltung nutzt die Kalibrierroutine durch das Messsystem bestimmte Werte für die Position der Linearachse und die vom Aktor aufgebrachte Kraft, um den Parameter zu ermitteln.

In einer vorteilhaften Ausgestaltung sind zwei unterschiedliche Kalibrierroutinen vorgesehen: eine erste Kalibrierroutine für eine Grobdetektion und eine zweite für eine Feindetektion des Parameters. Diese zweistufige Strategie ist besonders dann von Vorteil, wenn das Gewicht des angebauten Elements gänzlich unbekannt oder nur mit einem sehr großen Fehler bekannt ist.

Bevorzugt ist die zweite Kalibrierroutine hierbei so ausgestaltet, dass sie den durch die Grobposition bestimmten Parameter zur Ansteuerung des Antriebs nutzt.

Die erste Kalibrierroutine (Grobdetektion) wird bevorzugt bei unbekannter oder nur grob bekannter Masse durchgeführt. Hierbei wird die Linearachse kraftgesteuert angesteuert, und die Kraft wird bei stillstehender Achse kontinuierlich oder schrittweise erhöht, bis eine Bewegung der Achse erfasst wird. Die Kraft, bei welcher die Bewegung einsetzt, wird herangezogen, um den Parameter zu bestimmen.

Die zweite Kalibrierroutine (Feindetektion) fährt die Linearachse positionsgesteuert auf eine Sollposition, beispielsweise eine Mittenposition. Die Kraft, die zum Halten dieser Sollposition aufgebracht werden muss, wird dann zur Bestimmung des Parameters herangezogen.

Die zweite Kalibrierroutine (Feindetektion) wird bevorzugt angewendet, wenn die Masse bereits ungefähr bekannt ist (z.B. mit einer Genauigkeit von +/- 15%) oder um eine genauere Bestimmung nach der Grobdetektion durchzuführen.

Bei dem durch die Kalibrierroutine bestimmten Parameter handelt es sich vorzugsweise um die Masse des an der Ausgleichseinheit angeordneten Elementes.

Gemäß einer möglichen Ausgestaltung bestimmt die Steuerung aus einer durch die Kalibrierroutine bestimmten Kraft diese Masse und nutzt diesen Wert als Input für die nachfolgende Kraftregelung mit Gewichtsausgleich.

Die Kalibrierroutine kann weiterhin eingesetzt werden, um nicht nur die Gewichtskraft, sondern auch andere Störkräfte auszugleichen. Solche Kräfte können beispielsweise durch Versorgungsstränge oder Kabelbündel entstehen, die zum Endeffektor führen und je nach Position eine Kraft auf die Ausgleichseinheit ausüben.

Bevorzugt umfasst die Steuerung hierbei eine Überwachungsfunktion, welcher im ersten Betriebsmodus die Position der Linearachse überwacht Insbesondere kann hierbei eine Feindetektion durchgeführt werden.

Alternativ oder zusätzlich kann der Kalibriervorgang über eine Eingabeeinheit von einem Bediener initiiert werden.

Ein weiterer, unabhängiger Aspekt der Erfindung betrifft eine Ausgleichseinheit mit mindestens einer durch einen Aktor angetriebenen Linearachse, einem Messsystem und einer Steuereinheit, wobei die Steuereinheit zwischen einem ersten und einen zweiten Betriebsmodus umschaltbar ist, wobei die Steuerung die Linearachse in dem ersten Betriebsmodus kraftgesteuert ansteuert und in dem zweiten Betriebsmodus positionsgesteuert ansteuert.

Bevorzugt steuert die Steuerung die Linearachse in dem ersten Betriebsmodus so an, dass eine auf die Ausgleicheinheit wirkende Gewichtskraft ausgeglichen wird. Bevorzugt kann eine an der Ausgleichseinheit angeordnete Einheit hierdurch kraftlos gestellt werden und frei beweglich sein. In einem zweiten Betriebsmodus steuert die Steuerung die Linearachse positionsgesteuert an. Dies kann genutzt werden, um die Ausgleichseinheit gezielt in eine definierte Position zu fahren. Insbesondere steuert die Steuerung die Linearachse in dem zweiten Betriebsmodus so an, dass die Ausgleichseinheit in einer vorgegebenen Position positioniert und insbesondere zentriert wird.

Beide Aspekte der Erfindung, die Kalibrierroutine und die Umschaltbarkeit der Betriebsmodi, können vorteilhaft miteinander kombiniert werden.

Bevorzugte Ausgestaltungen der vorliegenden Erfindung, welche beide Aspekte weiterbilden, werden im Folgenden beschrieben.

Bevorzugt umfasst die Ausgleichseinheit ein Messsystem, das die Ausrichtung der Ausgleichseinheit im Raum bestimmt. Bevorzugt bestimmt die Steuerung in dem ersten Betriebsmodus die Kraft, mit welcher die Linearachse für den Gewichtsausgleich beaufschlagt wird, auf Grundlage der durch das Messsystem bestimmten Ausrichtung. Dies gewährleistet eine korrekte Funktion des Gewichtsausgleichs unabhängig von der Orientierung im Raum, was insbesondere beim Einsatz an Mehr-Achs-Robotern von Vorteil ist. Bei dem Messsystem kann es sich um ein Intertialmesssystem handeln. Alternativ oder zusätzlich kann das Messsystem zur Bestimmung der Ausrichtung auf Ansteuerdaten zur Ansteuerung einer Handhabungsvorrichtung, an welcher die Ausgleichseinheit angebaut ist, zurückgreifen, um die Ausrichtung zu bestimmen.

Bevorzugt bestimmt die Kalibrierroutine den Parameter des Gewichtsausgleichs unter Berücksichtigung der Ausrichtung der Ausgleichseinheit während der Durchführung der Kalibrierroutine. Bevorzugt wird hierbei ein Parameter bestimmt, welcher von der Ausrichtung unabhängig ist.

Bevorzugt ist die Steuerung so ausgestaltet, dass die Ausrichtung der Ausgleichseinheit während der Durchführung der Kalibrierroutine nicht verändert wird.

Die Ausgleichseinheit kann eine, zwei oder drei Linearachsen aufweisen, die bevorzugt senkrecht aufeinander stehen, um Bewegungen und/oder Kompensationen in bis zu drei Raumrichtungen (x, y, z) zu ermöglichen. Bevorzugt werden die Linearachsen so angesteuert, wie dies oben beschrieben wurde.

Die erfindungsgemäße Ausgleichseinheit gemäß dem ersten und/oder zweiten Aspekt ist vorzugsweise Teil eines Systems, das weiterhin eine Handhabungseinheit, beispielsweise einen Mehr-Achs-Roboter mit rotatorischen und/oder linearen Achsen, und einen über die Ausgleichseinheit an der Handhabungseinheit angeordneten Endeffektor umfasst.

Der Endeffektor kann beispielsweise einen Greifer und/oder einen Werkzeugwechsler umfassen.

Gemäß einer möglichen Ausgestaltung ist die Steuerung so ausgestaltet, dass durch die Kalibrierroutine ein Gewichtsausgleich für einen durch den Greifer gegriffenen Gegenstand und/oder für ein an dem Werkzeugwechsler angeordnetes Werkzeug erfolgt.

Gemäß einer möglichen Ausgestaltung ist die Steuerung so ausgestaltet, dass durch die Kalibrierroutine ein Ausgleich für eine durch einen Versorgungsstrang, welcher von dem Handhabungsgerät zu dem Endeffektor verläuft, auf die Ausgleichseinheit wirkende Kraft erfolgt. Solche Versorgungsstränge können je nach Position und Ausrichtung erhebliche Störkräfte ausüben.

Bevorzugt ist die Steuerung so ausgestaltet, dass die Kalibrierroutine in einer Ausrichtung der Ausgleichseinheit erfolgt, mit welcher der Endeffektor in einem darauffolgenden Betätigungsvorgang betätigt wird. Hierdurch können insbesondere positionsabhängige Einflüsse kompensiert werden.

Die Steuerung umfasst bevorzugt einen Mikroprozessor und einen nicht-flüchtigen Speicher, auf welchem ein Computerprogramm abgespeichert ist. Das Computerprogramm umfasst bevorzugt Anweisungen, welche bei einem Ablaufen des Computerprogramms auf dem Mikroprozessor die oben beschriebenen Funktionen der Steuerung zur Verfügung stellen. Die Steuerung steht bevorzugt in Signalverbindung mit dem Messsystem und dem Aktor.

Das System aus Handhabungseinheit und Ausgleichseinheit kann eine gemeinsame Steuerung für die Handhabungseinheit und Ausgleichseinheit aufweisen, oder separate Steuerungen.

Die vorliegende Erfindung umfasst weiterhin ein Verfahren zum Betrieb einer Ausgleichseinheit und/oder eines Systems, wie es oben beschrieben wurde.

Das Verfahren umfasst in einem ersten Aspekt die Durchführung einer Kalibrierroutine, durch welche ein Parameter des Gewichtsausgleichs bestimmt wird.

In einem zweiten Aspekt umfasst das Verfahren das Umschalten zwischen einem ersten, kraftgesteuerten Betriebsmodus und einem zweiten, positionsgesteuerten Betriebsmodus.

Die vorliegende Erfindung wird nun anhand von Zeichnungen näher beschrieben.

### Dabei zeigen:

- Fig. 1: eine schematische Darstellung eines Ausführungsbeispiels eines erfindungsgemäßen Systems,
- Fig. 2: eine schematische Darstellung eines Ausführungsbeispiels einer erfindungsgemäßen Ausgleichseinheit,
- Fig. 3: ein Diagramm, welches ein Ausführungsbeispiels einer Kalibrierroutine zeigt,
- Fig. 4: eine perspektivische Darstellung eines konstruktiven Ausführungsbeispiels einer erfindungsgemäßen Ausgleichseinheit mit einer Linearachse,
- Fig. 5: eine perspektivische Darstellung eines konstruktiven Ausführungsbeispiels einer erfindungsgemäßen Ausgleichseinheit mit zwei Linearachsen, und
- Fig. 6: eine perspektivische Darstellung eines konstruktiven Ausführungsbeispiels einer erfindungsgemäßen Ausgleichseinheit mit drei Linearachsen.

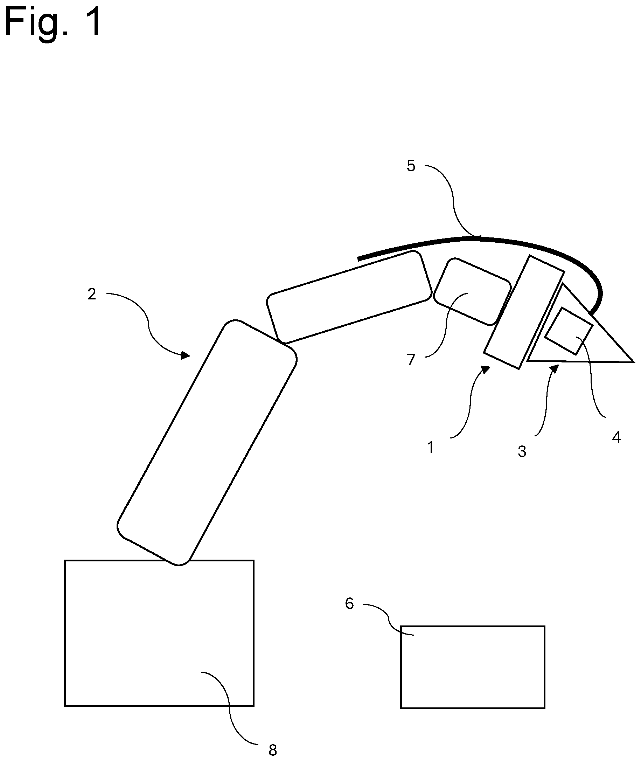

Fig. 1 zeigt ein Ausführungsbeispiel eines erfindungsgemäßen Systems aus einer Handhabungseinheit 2, an welcher über eine erfindungsgemäße Ausgleichseinheit 1 ein Endeffektor 3 angeordnet ist. Weiterhin ist schematisch eine Steuerung 6 für die Handhabungseinheit 2, die Ausgleichseinheit 1 und/oder den Endeffektor 3 gezeigt.

Die Handhabungseinheit 2 hat eine Mehrzahl von Gliedern, welche über Antriebe relativ zueinander bewegbar sind, um ein Endglied 7 gegenüber einer Basis 8 im Raum zu bewegen und/oder auszurichten. An dem Endglied 7 ist die Ausgleichseinheit 1 montiert. Bei den Antrieben kann es sich um rotatorische und/oder Linearachsen handeln. Insbesondere handelt es sich bei der Handhabungseinheit 2 um einen 6-Achse-Roboter mit rotatorischen Achsen und/oder ein Linear- und/oder Flächenportal.

Bei dem Endeffektor kann es sich beispielsweise um einen Greifer oder einen Werkzeugwechsler handeln. An dem Endeffektor kann daher im Betrieb zumindest zeitweise ein weiteres Element 4, wie beispielsweise ein Werkstück oder Werkzeug, angeordnet sein.

Weiterhin ist ein Versorgungsstrang 5 gezeigt, welcher von dem Handhabungsgerät 2 über die Ausgleicheinheit 1 hinweg zu dem Endeffektor 3 geführt ist. Es kann sich hierbei insbesondere um Kabel und/oder Schläuche handeln.

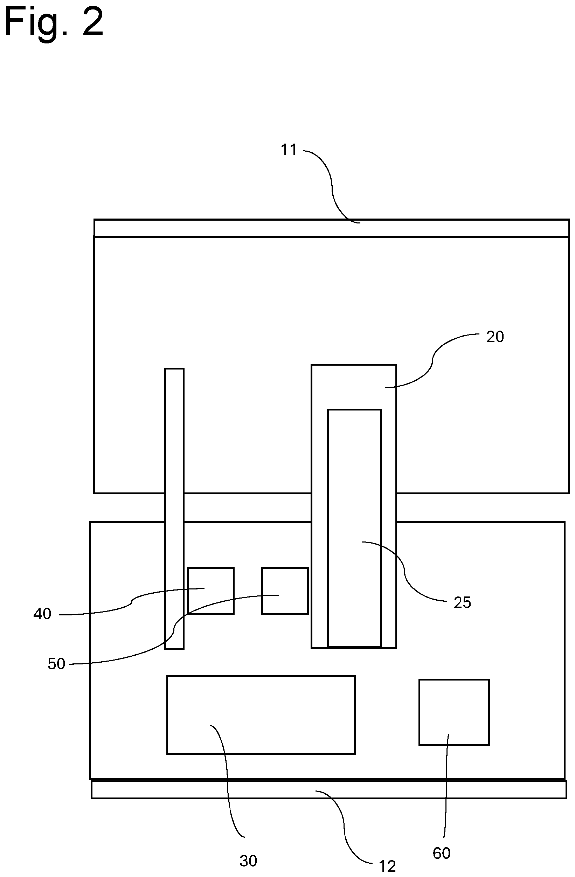

Fig. 2 zeigt schematisch den Aufbau eines Ausführungsbeispiels einer Ausgleichseinheit gemäß der Erfindung. Diese umfasst ein erstes Element 11 mit einer ersten Montageschnittstelle, über welche die Ausgleichseinheit an dem Endglied 7 des Handhabungsgerätes montierbar ist, und ein zweites Element 12 mit einer zweiten Montageschnittstelle, an welcher der Endeffektor montierbar ist.

Die Ausgleichseinheit umfasst mindestens eine Linearachse 20, über welche das zweite Element 12 gegenüber dem ersten Element 11 bewegbar ist. Die Linearachse 20 weist einen Antrieb 25 auf, beispielsweise einen Pneumatikzylinder oder einen elektromechanischen Linearantrieb. Der Antrieb 25 wird durch eine Steuerung 30 angesteuert.

Weiterhin ist ein Messsystem zur Bestimmung der Position der Linearachse 20 und der Kraft des Antriebs 25 vorgesehen. Hierbei ist eine Positionsmessanordnung 40 und ein Kraftsensor 50 vorgesehen, welche die Position und die Kraft messen. Beispielsweise kann bei einem pneumatischen Antrieb die Kraft aus dem Druck in den Zylinderkammern bestimmt werden. Alternativ kann das Messsystem zur Bestimmung der Position und/oder Kraft jedoch auch auf Ansteuerwerte für den Antrieb 25 zurückgreifen.

Weiterhin ist eine Einheit 60 zur Bestimmung der Ausrichtung der Ausgleichseinheit vorgesehen, insbesondere ein Sensor zur Bestimmung der Neigung gegenüber der Vertikalen. Beispielsweise kann ein Inertialsensor eingesetzt werden.

Die Ausgleichseinheit ist für den Einsatz in je nach Anzahl der Linearachsen für den Einsatz mit bis zu drei Raumrichtungen (x, y, z) ausgelegt. Jede der Achsen ist hierbei mit einem entsprechenden Antrieb und Messsystem ausgestattet, wie es für die Linearachse 20 beschrieben wurde.

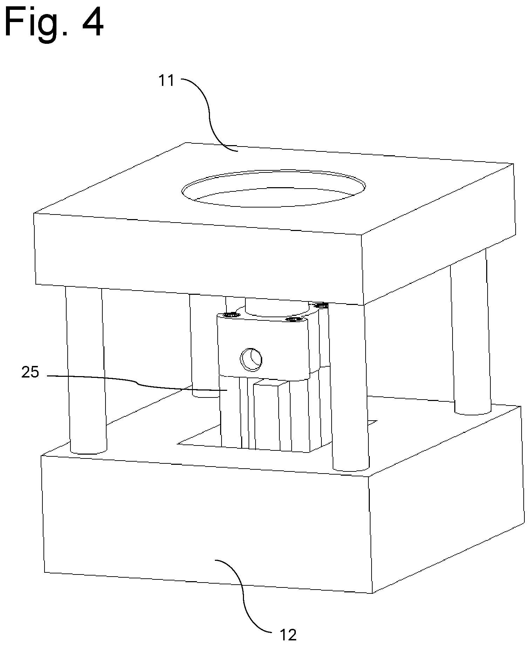

Fig. 4, 5 und 6 zeigen hierfür mögliche konstruktive Ausführungen der Ausgleichseinheit mit einer, zwei und drei Linearachsen.

Fig. 4 zeigt eine Ausführung mit einer Linearachse, bestehend aus einem ersten Element 11, einem zweiten Element 12 und einem Antrieb 25, welcher eine Bewegung in X-Richtung erlaubt, d. h. durch welche der Abstand der beiden Elemente 11 und 12 eingestellt werden kann. Insbesondere können die beiden Linearachsen hierbei jeweils eine Schlittenführung und einen hieran geführten Schlitten umfassen.

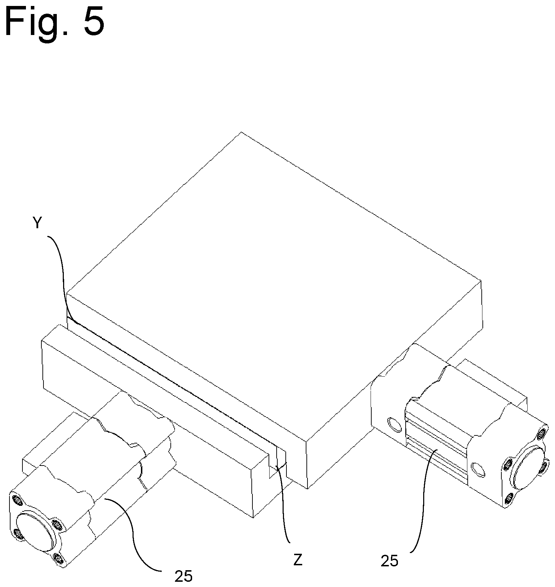

Fig. 5 zeigt eine Ausführung mit zwei senkrecht zueinander stehenden Linearachsen für Bewegungen in Y- und Z-Richtung, die jeweils von einem Antrieb 25 angetrieben werden. Bevorzugt spannen die Linearachsen hierbei eine Ebene auf, in welcher das Element 11 verschoben werden kann, ohne den Abstand zum Element 12 zu verändern.

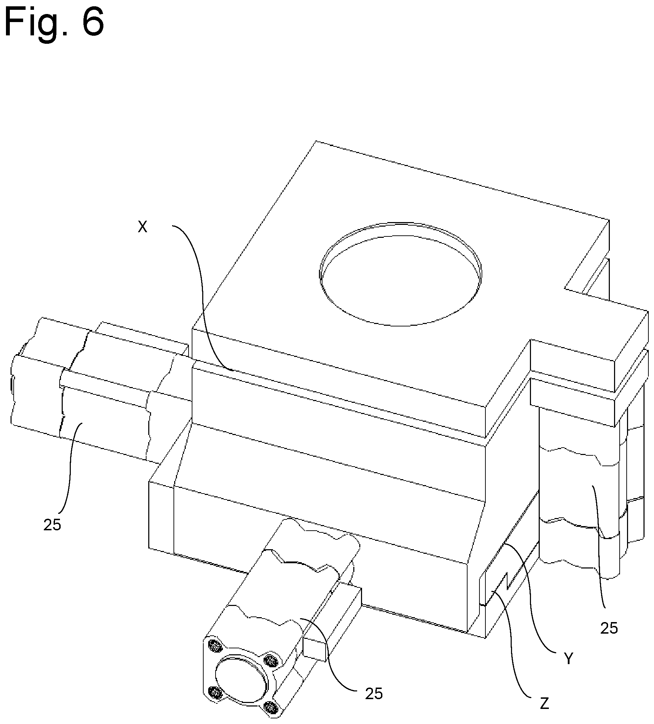

Fig. 6 zeigt eine Ausführung mit drei senkrecht zueinander stehenden Linearachsen für Bewegungen in X-, Y- und Z-Richtung. Insbesondere kann die Ausgestaltung gemäß Fig. 6 einer Kombination der Achsen der Ausführungsbeispiele aus Fig. 4 und 5 entsprechen.

Die Steuerung der Ausgleichseinheit ermöglicht bevorzugt zwei unterschiedliche Betriebsmodi.

In einem ersten Betriebsmodus wird die mindestens eine Linearachse kraftgesteuert angetrieben. Hierbei kann insbesondere eine Nullkraftregelung vorgesehen sein, bei der die Steuerung die auf die Ausgleichseinheit wirkende Gewichtskraft kompensiert. In diesem Zustand ist die Ausgleichseinheit samt angebautem Endeffektor daher frei beweglich. Alternativ kann im kraftgesteuerten Modus auch eine bestimmte, vordefinierte Kraft vorgegeben werden, mit welcher der Endeffektor beaufschlagt wird, was beispielsweise für Oberflächenbearbeitungen genutzt werden kann.

In einem zweiten Betriebsmodus wird die mindestens eine Linearachse positionsgesteuert angetrieben. In diesem Modus kann die Ausgleichseinheit gezielt in eine definierte Position gefahren werden. Insbesondere kann der zweite Betriebsmodus zum Zentrieren der Ausgleichseinheit eingesetzt werden.

Die Steuerung ist bevorzugt in der Lage, die aktuelle Position und/oder die aktuell durch den Antrieb ausgeübte Kraft auszulesen.

Weiterhin kann eine Sperrfunktion vorgesehen sein, um die Ausgleichseinheit in einer festen Position zu arretieren.

Sie Steuerung erlaubt es bevorzugt, zwischen dem ersten und dem zweiten Betriebsmodus umzuschalten. Hierdurch kann je nach dem aktuell durch den Endeffektor durchgeführten Arbeitsschritt der geeignete Betriebsmodus eingesetzt werden. Bevorzugt schaltet die Steuerung hierbei automatisch zwischen den Betriebsarten um.

Bevorzugt kann die Steuerung die Raumlage der Ausgleichseinheit erkennen, so dass insbesondere der Gewichtsausgleich unabhängig von der Orientierung im Raum funktioniert. Dies macht die Ausgleichseinheit gut für den Einsatz an Robotern, Achs-Portalen und ähnlichen Automationssystemen geeignet.

Gemäß der vorliegenden Erfindung umfasst die Steuerung eine Kalibrierroutine zur Bestimmung eines Parameters des Gewichtsausgleichs, insbesondere zur automatischen Gewichtsermittlung/-korrektur. Es handelt sich hierbei bevorzugt um einen Software-Technologiebaustein, welche auf die bestehende Sensorik/Aktorik des Systems zurückgreift.

Die Ausgangslage ist hierbei im Allgemeinen, dass das Gewicht des Endeffektors als solchem bekannt ist. Wenn dieser aber beispielsweise Teile verschiedener Größen und nicht bekannten Gewichts greift, oder unterschiedliche Erweiterungen, wie z.B. Werkzeuge/Greiferwechselsysteme oder ähnliches hat, muss das vollständige Gewicht automatisch ermittelt oder korrigiert werden, um einen ordnungsgemäßen Gewichtsausgleich sicherzustellen.

Die Steuerung umfasst hierfür zwei Kalibrierroutinen, wobei eine erste Kalibrierroutine eine Grobe Ermittlung des Gewichtes und eine zweite Kalibrierroutine eine genauere Ermittlung des Gewichtes erlaubt.

Diese Grobe Ermittlung kann insbesondere dann durchgeführt werden, wenn das Gesamtgewicht, das an der Ausgleichseinheit hängt, nicht mit einer Genauigkeit von +/-15% bekannt ist.

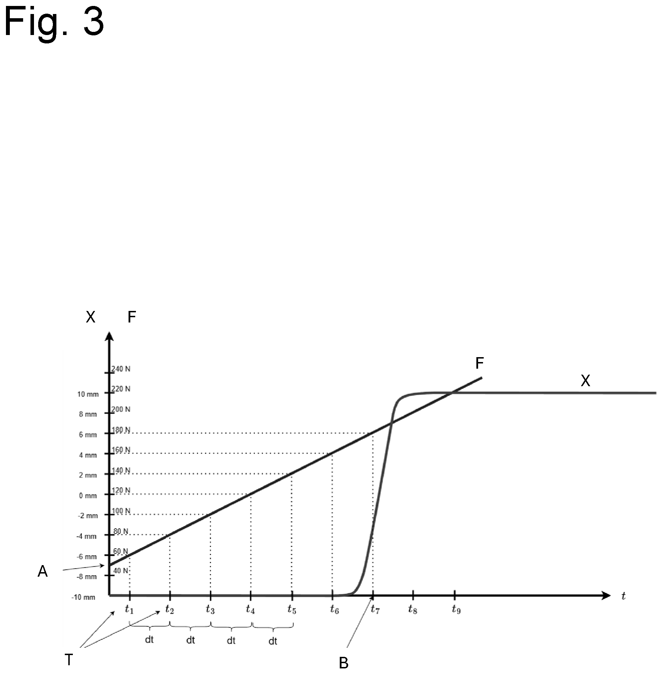

Fig. 3 zeigt hierbei ein Diagramm, das ein Ausführungsbeispiel einer Kalibrierroutine zur Grobdetektion des Gewichtes illustriert. Das Diagramm zeigt den Verlauf der Kraft F und der Position X der Linearachse über die Zeit t.

Um das Gewicht grob zu ermitteln, wird die Kraft F des Antriebs ausgehend von der Situation A, d.h. bei stillstehender Achse, so lange erhöht, bis sich die Linearachse bewegt. Diese Bewegung wird bei Abtastzeitpunkt t7 (Punkt B) detektiert. Aus der hierfür benötigten Kraft wird sodann das auf die Ausgleichseinheit wirkende Gewicht bestimmt.

Im Ausführungsbeispiel erfolgt dies schrittweise, wobei als Startwert die Kraft gewählt wird, welche sich aus dem bekannten Gewicht des Endeffektors (inklusive der beweglichen Teile der Ausgleichseinheit) ergibt. Bevorzugt ist hierbei die Schrittweite der iterativen Krafterhöhung und/oder eine obere Kraftgrenze vorgebbar. Das Diagramm zeigt hierbei die Abtastpunkte T bei t1, t2, etc.

Dies geschieht so lange, bis bei Punkt B eine Bewegung der Achse in X-Richtung detektiert wird. Insbesondere war hierbei bei dem Abtastpunkt t6 noch keine Bewegung erkennbar, bei t7 ist die Linearachse dagegen ausgelenkt. Aus den bei den beiden Abtastpunkten t6 und t7 angelegten Kräften wird, beispielsweise als Mittelwert, die zum Anheben der Masse benötigte Kraft geschätzt.

Hieraus wird wiederum ein Schätzwert für die angehängte Masse berechnet, beispielsweise über die Formel Masse = Kraft / 9,81 m/s².

Ist der Winkel a der Linearachse gegenüber der Vertikalen bekannt, wird die Masse unter Berücksichtigung des Winkels a wie folgt berechnet: $Masse = Kraft / \left(sin \left(a\right)*9,81 m/{s}^{2}\right.$

Diese Grobdetektion wird insbesondere dann durchgeführt, wenn das Gesamtgewicht, das an der Einheit hängt, nicht bereits mit einer gewissen Genauigkeit, beispielsweise von +/- 15%, bekannt ist. Der so ermittelte grobe Massenwert kann dann für eine nachfolgende Feindetektion verwendet werden.

Für die Feindetektion wird die Ausgleichseinheit über die Positionsregelung auf eine definierte Sollposition, beispielsweise eine Mittenposition (0 mm), eingeregelt. Anschließend wird die Kraft ausgelesen, die notwendig ist, um diese Position zu halten. Aus diesem genauen Kraftwert lässt sich das tatsächliche Gewicht bzw. die Masse präziser bestimmen. Hierzu kommen wiederum die obigen Formeln zum Einsatz.

Diese zweistufige Strategie ist vorteilhaft, falls die Positionsregelung für eine stabile Funktion bereits eine ungefähre Angabe zur bewegten Masse benötigt. Ist die Masse zumindest ungefähr bekannt, kann unmittelbar mit der Feindetektion begonnen werden.

Die so ermittelte Masse wird dann als Input-Parameter in die Steuerung eingegeben, um bei der darauffolgenden Kraftregelung einen entsprechenden Gewichtsausgleich durchzuführen.

Wird der Gewichtsausgleich in der gleichen Pose durchgeführt, in welcher auch die Kalibrierung erfolgt, könnte auf eine Umrechnung von Kraft auf Masse unter Berücksichtigung der Ausrichtung während des Kalibriervorgangs verzichtet werden, und als Parameter einfach die Kraft in der Nullstellung der Positionsregelung als Nullpunkt für die Kraftregelung eingesetzt werden.

Durch die Bestimmung der Masse und die Berücksichtigung der Ausrichtung während des Kalibriervorgangs kann diese Nullstellung der Kraftregelung jedoch auch für andere Posen der Ausgleichseinheit berechnet werden. Weiterhin erlaubt die Kenntnis der Masse eine verbesserte Positionsregelung.

Neben der Masse, welche an der Ausgleichseinheit angehängt ist, gibt es jedoch noch weitere Einflussfaktoren, die auf die Ausgleichseinheit einwirken können, insbesondere die Kabelstränge, welche von der Handlingeinheit zu der an die Ausgleichseinheit angehängte Einheit geführt sind und je nach Position eine Kraft auf diese ausüben können. Hierbei haben die Erfinder festgestellt, dass sich hier nicht unerhebliche Kräfte ergeben können, durch welche die Ausgleichseinheit, befindet sie sich in der Kraftregelung mit Gewichtsausgleich, aus ihrer Nullstellung wegläuft.

Die Kalibrierfunktion und insbesondere die Feindetektion kann daher genutzt werden, um solche Störkräfte, die beispielsweise durch den Versorgungsstrang (5 in Fig. 1) entstehen, zu kompensieren.

Bevorzugt ist die Steuerung hierbei so ausgestaltet, dass sie die Kalibrierroutine in derselben Pose durchführt, in der die Ausgleichseinheit später kraftgeregelt betrieben werden soll, da der Einfluss der Kabel üblicherweise in anderer Weise von der Pose abhängen wird als der Einfluss der Masse, und durch die Umrechnung auf eine Masse bei einer Änderung der Pose daher nicht mehr ausgeglichen werden kann.

Denkbare Anwendungsfälle sind unter anderem die folgenden:
Bei komplett unbekannter Masse: Grob-Detektion und Fein-Detektion der Masse initial nach dem Aufnehmen der Masse, um im weiteren Verlauf auf Grundlage des so bestimmten Wertes und den Sensorwerten zur aktuellen Ausrichtung die Ansteuerung vorzunehmen.

Bei ungefähr bekannter Masse: Fein-Detektion der Masse nach dem Aufnehmen, um im weiteren Verlauf auf Grundlage der Sensordaten zur aktuellen Ausrichtung einen Gewichtsausgleich vorzunehmen.

Zusätzlich oder alternativ: Fein-Detektion in jener Pose, in welcher die Ausgleichseinheit eingesetzt werden soll, beispielsweise um Einflüsse der Verkabelung auszugleichen.

Der letztere Anwendungsfall kann beispielsweise dann eingesetzt werden, wenn die Steuerung beim Umschalten der Ausgleichseinheit auf Kraftregelung mit Gewichtsausgleich feststellt, dass die Achsen weglaufen, und damit erkennt, dass die derzeitige Kalibrierung offenbar nicht stimmt.

In diesem Fall kann daher insbesondere eine Fein-Detektion der Masse durchgeführt werden, um dieses Weglaufen zu verhindern.

Die Kalibrierroutine oder Kalibrierroutinen werden bevorzugt durchgeführt, während die Handhabungseinheit sich nicht bewegt, um Störeinflüsse, welche insbesondere durch die Beschleunigung der Massen entstehen könnten, zu vermeiden.

Der Betrieb des Systems und/oder der Ausgleichseinheit erfolgt bevorzugt automatisch.

## Patentansprüche

1. Ausgleichseinheit mit mindestens einer durch einen Aktor angetriebenen Linearachse, einem Messsystem und einer Steuereinheit, wobei die Steuereinheit die Linearachse in mindestens einem ersten Betriebsmodus so ansteuert, dass eine auf die Ausgleicheinheit wirkende Gewichtskraft ausgeglichen wird,
**dadurch gekennzeichnet,**
**dass** die Steuerung mindestens eine Kalibrierroutine umfasst, durch welche ein Parameter des Gewichtsausgleichs bestimmt wird.

2. Ausgleichseinheit nach Anspruch 1, wobei das Messsystem die Position der Linearachse und die Kraft des Aktors bestimmt, wobei bevorzugt die Kalibrierroutine den Parameter des Gewichtsausgleichs anhand von durch das Messsystem bestimmten Werten für die Position und die Kraft bestimmt.

3. Ausgleichseinheit nach Anspruch 1 oder 2, wobei die Steuerung eine erste und eine zweite Kalibrierroutine umfasst, durch welche der Parameter des Gewichtsausgleichs bestimmt werden kann, wobei es sich bei der ersten Kalibrierroutine um eine Grobdetektion und bei der zweiten Kalibrierroutine um eine Feindetektion des Parameters handelt.

4. Ausgleichseinheit nach einem der vorangegangenen Ansprüche, wobei in zumindest einer ersten Kalibrierrountine die Linearachse kraftgesteuert angesteuert wird und die Kraft bei stillstehender Achse kontinuierlich und/oder schrittweise erhöht wird, bis eine Bewegung der Achse erfasst wird, wobei die Kraft, bei welcher eine Bewegung erfasst wird, zur Bestimmung des Parameters herangezogen wird.

5. Ausgleichseinheit nach einem der vorangegangenen Ansprüche, wobei in zumindest einer zweiten Kalibrierrountine die Linearachse positionsgesteuert auf eine Sollposition gesteuert wird und die zum Halten der Sollposition aufgebrachte Kraft zur Bestimmung des Parameters herangezogen wird.

6. Ausgleichseinheit nach einem der vorangegangenen Ansprüche, wobei es sich bei dem Parameter um die Masse eines an der Ausgleichseinheit angeordneten Elementes handelt, und/oder wobei die Steuerung aus einer durch die Kalibrierrountine bestimmten Kraft die Masse eines an der Ausgleichseinheit angeordneten Elementes bestimmt.

7. Ausgleichseinheit nach einem der vorangegangenen Ansprüche, wobei die Steuereinheit in dem ersten Betriebsmodus die Kraft, mit welcher die Linearachse für den Gewichtsausgleich beaufschlagt wird, auf Grundlage des Parameters bestimmt.

8. Ausgleichseinheit mit mindestens einer durch einen Aktor angetriebenen Linearachse, einem Messsystem und einer Steuereinheit, insbesondere Ausgleichseinheit nach einem der vorangegangenen Ansprüche,
**dadurch gekennzeichnet,**
**dass** die Steuereinheit zwischen einem ersten und einen zweiten Betriebsmodus umschaltbar ist, wobei die Steuerung die Linearachse in dem ersten Betriebsmodus kraftgesteuert ansteuert und in dem zweiten Betriebsmodus positionsgesteuert ansteuert.

9. Ausgleichseinheit gemäß Anspruch 8, wobei die Steuerung die Linearachse in dem ersten Betriebsmodus so ansteuert, dass eine auf die Ausgleicheinheit wirkende Gewichtskraft ausgeglichen wird, und/oder wobei die Steuerung die Linearachse in dem zweiten Betriebsmodus so ansteuert, dass die Ausgleichseinheit in eine vorgegebene Position positioniert und insbesondere zentriert wird.

10. Ausgleichseinheit nach einem der vorangegangenen Ansprüche, wobei das Messsystem eine Ausrichtung der Ausgleichseinheit im Raum bestimmt, wobei die Steuerung in dem ersten Betriebsmodus die Kraft, mit welcher die Linearachse für den Gewichtsausgleich beaufschlagt wird, auf Grundlage der durch das Messsystem bestimmten Ausrichtung bestimmt.

11. Ausgleichseinheit nach einem der vorangegangenen Ansprüche, wobei die Ausgleichseinheit mindestens zwei oder drei durch Aktoren angetriebene Linearachsen aufweist, welche von der Steuerung entsprechend angesteuert werden, wobei die Linearachsen bevorzugt senkrecht aufeinander stehen.

12. System aus einer Handhabungseinheit, einer Ausgleichseinheit nach einem der vorangegangenen Ansprüche und einem über die Ausgleichseinheit an der Handhabungseinheit angeordneten Endeffektor, wobei es sich bei der Handhabungseinheit bevorzugt um einen Mehr-Achs-Roboter handelt, insbesondere um einen Roboter mit einer Mehrzahl an rotatorischen Achsen und/oder einer Mehrzahl an Linearachsen.

13. System nach Anspruch 12, wobei der Endeffektor einen Greifer und/oder einen Werkzeugwechsler umfasst, wobei die Steuerung so ausgestaltet ist, dass durch die Kalibrierroutine ein Gewichtsausgleich für einen durch den Greifer gegriffenen Gegenstand und/oder für ein an dem Werkzeugwechsler angeordnetes Werkzeug erfolgt,
und/oder
wobei ein Versorgungsstrang von dem Handhabungsgerät zu dem Endeffektor verläuft, wobei die Steuerung so ausgestaltet ist, dass durch die Kalibrierroutine ein Ausgleich für eine durch den Versorgungsstrang auf die Ausgleichseinheit wirkende Kraft erfolgt.

14. System nach einem der Ansprüche 12 oder 13, wobei die Steuerung so ausgestaltet ist, dass die Kalibrierroutine in einer Ausrichtung der Ausgleichseinheit erfolgt, mit welcher der Endeffektor in einem darauffolgenden Betätigungsvorgang betätigt wird.

15. Verfahren zum Betrieb einer Ausgleichseinheit nach einem der Ansprüche 1 bis 11 und/oder eines Systems nach einem der Ansprüche 12 bis 14, wobei das Verfahren bevorzugt umfasst:
- Durchführung einer Kalibrierroutine, durch welche ein Parameter des Gewichtsausgleichs bestimmt wird; und/oder
- Umschalten zwischen einem ersten und einen zweiten Betriebsmodus, wobei die Linearachse in dem ersten Betriebsmodus kraftgesteuert ansteuert und in dem zweiten Betriebsmodus positionsgesteuert ansteuert wird.
